(19) **Europäisches Patentamt / European Patent Office / Office européen des brevets**

(11) **EP 2 225 812 B1**

(12) **EUROPEAN PATENT SPECIFICATION**

(45) Date of publication and mention
of the grant of the patent:
**09.03.2011 Bulletin 2011/10**

(51) Int Cl.:
**H02J 3/14** *(2006.01)*　　**H05B 37/02** *(2006.01)*

(21) Application number: **08806770.7**

(22) Date of filing: **17.10.2008**

(86) International application number:
**PCT/GB2008/050956**

(87) International publication number:
**WO 2009/068898 (04.06.2009 Gazette 2009/23)**

(54) **FREQUENCY SENSITIVE LIGHTING CONTROL DEVICE**

FREQUENZEMPFINDLICHE BELEUCHTUNGSSTEUEREINRICHTUNG

DISPOSITIF DE RÉGULATION D'ÉCLAIRAGE SENSIBLE À LA FRÉQUENCE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.11.2007 GB 0723323**

(43) Date of publication of application:
**08.09.2010 Bulletin 2010/36**

(73) Proprietor: **C.p. Electronics Limited
Wembley
London
Greater London HA0 1RR (GB)**

(72) Inventor: **MANS, Paul
Wembley HA0 1RR (GB)**

(74) Representative: **ip21 Ltd
Central Formalities Department
Norwich Research Park
Colney
Norwich
NR4 7UT (GB)**

(56) References cited:
**WO-A-01/80395　　　FR-A- 1 017 057
IT-A1- TO20 060 447　　US-A1- 2007 198 133**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

This invention relates to a device for controlling the electrical power supplied to a light source so as to reduce peak demand on the electricity grid.

Background to the Invention

In the face of climate change and the increasing scarcity of fossil fuels, energy usage has become a matter of huge concern. As a direct result, attempts to reduce the amount of electricity required by individuals and industry are the focus of great attention and spending by governments and pressure groups across the world. However, simply reducing the amount consumed may not be enough. Measures aimed at reducing consumption and avoiding waste will help, but it will also be necessary to address the efficiency of the power plants themselves.

The demand for electrical power is not constant. Instead, electrical supply grids experience frequent fluctuations as devices that draw power from the grid are turned on and off. To an extent these fluctuations are predictable; most countries experience a peak consumption of electricity in the early evening for example, at the time of day when the most lighting and heating is required. However, there are more frequent variations that are essentially random.

When the demand for power on a grid that supplies alternating current increases, the frequency of the alternating current will drop as the generating stations are placed under increasing strain. This occurs because any mismatch in the power available on the grid (Pg) and the demand for power ($P_d$) must be met by a change in the kinetic energy of the generators (E):

$$P_g - P_d = \frac{dE}{dt}$$

The kinetic energy of the generators is due to their rotation, and can be given in terms of their moment of inertia J and angular velocity $\omega$, summed across all the generators. Therefore:

$$P_g - P_d = \frac{d}{dt}\left( \sum_i J_n \omega_n^2 \right)$$

As can be seen from this equation, if the demand on the system is greater than the available power, the kinetic energy of the generators will decrease and their angular velocity will also decrease. This gives rise to the drop in frequency experienced on electrical supply grids during periods of high demand. The converse is also true; if the power being supplied to the grid is greater than the demand then the generators will speed up.

As the frequency of AC power varies, some devices will stop working properly. Even quite small variations can cause irreparable damage to sensitive electronic equipment. In the UK, the National Grid aims to maintain a frequency of 50Hz $\pm$ 1% to prevent this ever occurring. Therefore, all large electrical supply grids endeavour to respond to changes in demand as quickly as possible. This is done, in part, by having some generators operate in a "sensitive" mode.

Generators operating in sensitive mode are running below their maximum capacity. The grid is monitored for changes in frequency, and as those changes occur, the sensitive generators supply more or less power as appropriate. This helps to balance out changes in demand. However, this is a very expensive and inefficient process. Regardless of the power source, generators are designed to be most efficient when working under a full load, and running in a sensitive mode with the frequent changes in output that this requires both damages the generator and wastes energy. In the UK, the National Grid pays approximately £80 million a year to generators operating in sensitive mode, in recognition of the damage done to the generating and regulating equipment. This figure does not reflect the additional environmental damage being done.

Therefore, any means which can help to reduce the variations in demand will immediately make electricity supply more efficient and reduce wasted resources on any grid.

It is known for the thermostats of refrigerators to delay switching on the compressor if the frequency of the supply is below a threshold, in order to reduce spikes of demand in the supply. However, lighting systems are often safety critical, such that delaying the operation of the light can be dangerous. Thus, it is not possible to apply the demand-balancing solutions provided for other electrical devices to lighting systems.

Prior art systems are disclosed in documents US 2007/0198133 A1, WO 01/80395 A2, FR 1017057 and ITTO 20060447 A1.

Summary of the Invention

Viewed from a first aspect, this invention provides a device for controlling the electrical power supplied to a light source. The device comprises at least one dimmer which is suitable for receiving an input in the form of an alternating current and producing an output in the form of a current of the same or lower power. The device also comprises a frequency sensitive apparatus arranged so as to monitor the frequency of the input. The dimmer is arranged to vary the power of the output in response to the frequency of the input as detected by the frequency sensitive apparatus.

In this way the invention provides a lighting controller that can vary the power of its output in response to frequency fluctuations in the power supply. By dimming rather than simply turning on and off in response to frequency fluctuations, the device can minimise the inconvenience experienced by a user.

The light source may comprise a conventional incandescent bulb. It may also comprise an energy saving bulb, fluorescent lamp or any other electrical light source that is capable of dimming or at least tolerating a reduction in power supply without ceasing to operate. The device may be contained within a single container such as a conventional wall mounted switch box. However, the components that comprise the device may be more widely distributed and even shared with other devices. For example, the frequency sensitive apparatus may be arranged so as to monitor the frequency of the input of two or more devices.

The components of the device may be connected by wired connections. However, especially where the components are widely distributed, it may be desirable to provide a device where the components can communicate wirelessly using for example radio frequency transmissions. A wireless system could be used, for example, to control a dimmer that is remote from the rest of the device.

In a preferred embodiment, light sources are dimmed using a dimmable ballast. This is especially desirable where the device is controlling the electrical power supplied to a fluorescent lamp. In one embodiment according to the invention therefore, the device is arranged to provide a dimming signal to a ballast which functions as the dimmer by controlling the current to the light source.

In a preferred embodiment, in order that frequency fluctuations on a network to which the device is attached are counterbalanced by the behaviour of the device, an increase in the frequency of the input will often result in an increase in the power of the output. Similarly, a decrease in the frequency of the input will often result in a decrease in the power of the output.

Typically, a user can select the initial power of the output of the device. This allows the device to function as a normal dimmer, controlling the lighting level in a room, as well as offering a frequency response subsequently. The device may be provided with at least one light sensor so that it can provide an automated response to changing environmental light levels as well as other changes in the environment. The device may also be provided with other sensors such as occupancy sensors. The device can then vary the power of the output in response to both the frequency of the input and in response to other sensors such as light sensors and occupancy sensors. For example, a device according to the invention provided with a visible light sensor may have a target light level which it will maintain by adjusting the output of the dimmer. Then the device may further vary the light level around this target light level in response to the frequency of the input.

Typically, the device is provided with at least one discrete frequency threshold such that in use the power of the output is varied in response to the frequency of the input passing a frequency threshold. The device may respond to the frequency of the input passing the frequency threshold in both directions. However, it may sometimes be advantageous to provide thresholds that only function in one direction so that, for example, as the frequency of the input decreases the power of the output is also decreased, but as the frequency subsequently increases the power of the output stays low. This would be helpful on networks with especially unreliable power supply, as it would allow a greater opportunity for the network to recover from difficulties.

Where the device is provided with frequency thresholds as described above, the response of the device to the frequency of the input passing at least one of the frequency thresholds may be delayed by a predetermined period of time. There may be a delay for every threshold, or only certain thresholds but the delay can also depend on which direction the frequency of the input passes the frequency threshold. Typically, the device will provide a delay before responding when the frequency of the input falls below a frequency threshold. This behaviour is beneficial to the user, but does place extra strain on the electrical supply network and therefore will not always be appropriate.

Similarly, where the device is provided with frequency thresholds as described above, the response of the device to the frequency of the input passing at least one of the frequency thresholds may occur gradually over a predetermined period of time. This provides a gradual change in the lighting level and therefore causes less inconvenience for the user. However, this places extra strain upon the electrical supply network and therefore will not always be appropriate.

Typically, the response of the device to the frequency of the input passing at least one of the frequency thresholds is dependent upon the power of the output. For example, if the frequency of the input is below a frequency threshold of a first type and the power of the output is above an associated power threshold also of the first type then the power of the output is reduced. Similarly, if the frequency of the input is above a frequency threshold of a second type and the power of the output is below an associated power threshold also of the second type then the power of the output is increased. A frequency threshold may be of both the first and the second type.

In one arrangement, a user may select between two operating regimes. In the first operating regime, the electrical power of the output alternating current varies in response to the frequency as measured by the frequency sensitive apparatus. In the second operating regime, the electrical power of the output alternating current does not vary in response to the frequency as measured by the frequency sensitive apparatus. The user may also be provided with further regimes that vary more subtly;

for example they may be able to choose the frequencies that the device will respond to or how quickly the device responds.

Viewed from a second aspect, this invention provides a method for regulating the frequency of alternating current on a network comprising providing a plurality of devices as described above and connecting the devices to the network so that in use the alternating current on the network forms the input of the devices. The network may also be provided with other means of regulating the frequency such as generators operating in a sensitive mode.

Brief Description of the Drawings

An embodiment of the invention will now be described, by way of example only, and with reference to the accompanying drawings, in which:

Figure 1 is a block diagram showing a first device according to one embodiment of the invention connected to a lamp;

Figure 2 is a graph showing the frequency response behaviour of this first device to low frequencies when the first device is set to provide maximum power to the lamp;

Figure 3 is a graph showing the frequency response behaviour of this first device to low frequencies when the first device is set to provide less than the maximum power to the lamp;

Figure 4 is a graph showing the frequency response behaviour of this first device to changing frequencies with time;

Figure 5 is a block diagram showing a second device according to a second embodiment of the invention connected to three lamps; and

Figure 6 is a graph showing the frequency response behaviour of the second device according to the second embodiment to high frequencies when the second device is set to provide less than the maximum power to the lamp.

Detailed Description of Exemplary Embodiments

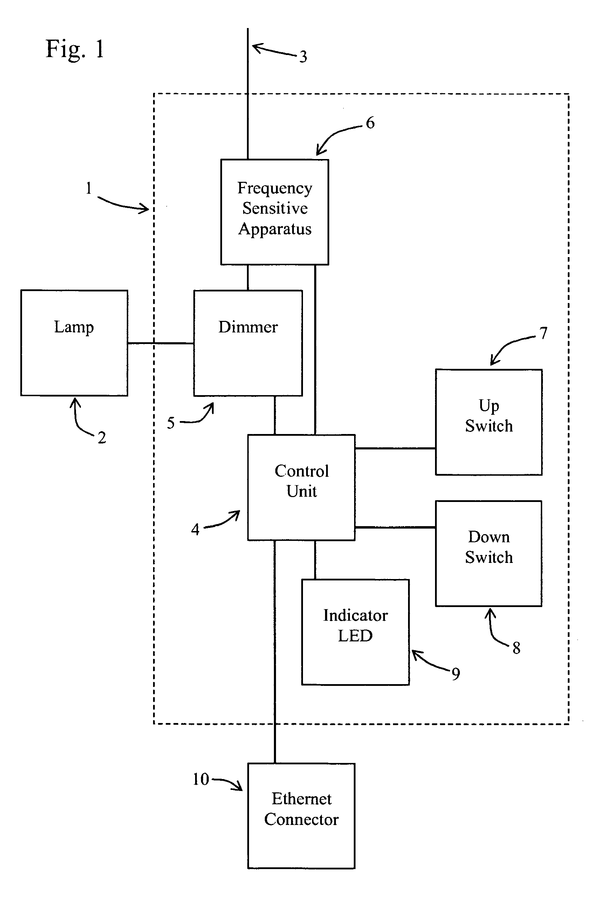

Figure 1 shows a diagram of a first lighting control device 1 according to a first embodiment of the invention arranged so as to provide power to a lamp 2. Mains electrical power is provided to the first device 1 through a connection 3.

The first device 1 comprises a control unit 4, a dimmer 5 and a frequency sensitive apparatus 6. There are also manual controls: an up switch 7 and a down switch 8. The control unit 4 is arranged so as to receive input from the frequency sensitive apparatus and the manual controls 7, 8. The control unit 4 then controls the behaviour of the dimmer 5 and subsequently the brightness and power consumption of the lamp 2.

In operation, pressing the up switch 7 causes the lamp 2 to turn on, while pressing the down switch 8 causes the lamp 2 to turn off. The user can adjust the level of brightness of the illumination by pressing and holding the manual controls 7, 8 as appropriate.

The frequency sensitive apparatus 6 is arranged so as to monitor the power supplied to the dimmer 5 through the connection 3. By default, the first device 1 operates in a frequency sensitive mode in which the control unit 2 adjusts the power used by the dimmer 5 according to the output of the frequency sensitive apparatus 6. The power output of the lamp is reduced when the frequency of the power drops, reducing the drain upon the electrical supply grid that provides the power to connection 3.

Users are often very sensitive to changes in their light levels. For this reason the first device 1 is provided with two ways of notifying the user when and why the light level has been adjusted. The first method is an indicator LED 9 on the surfaces of the first device 1. When the first device 1 adjusts the power used by the dimmer 5 in response to the output of the frequency sensitive apparatus 6, the indicator LED 9 is activated. This informs the user that the change in light level is due to the normal operation of the first device 1 and not a malfunction. The second way in which the first device 1 can notify the user is through an Ethernet convector 10. This allows the first device 1 to be networked, so that the user can be provided with information on the behaviour of the first device 1 through a PC. This also allows the user to control the lighting system remotely from a PC.

At any time the user can override frequency response of the first device 1 by pressing the up switch 7 for less than 0.5 seconds. This changes the behaviour of the first device 1 to absolute mode, and the dimmer 5 will continue to provide power to the lamp 2 at the level that the user has selected regardless of any changes measured by the frequency sensitive apparatus 6. The first device 1 remains in absolute mode until it is turned off, whereupon it returns to the default frequency sensitive mode.

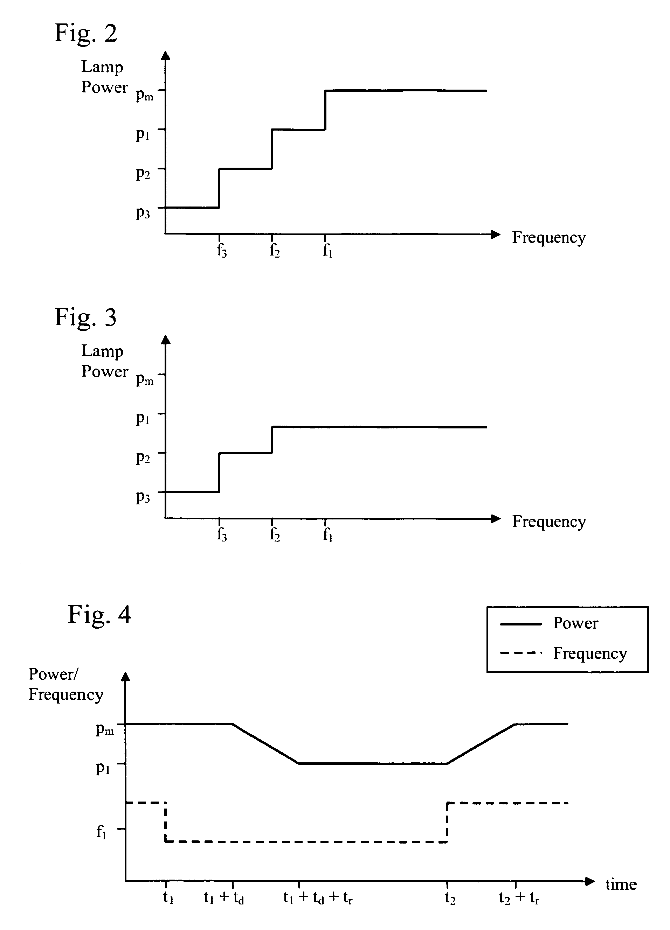

In order to minimise the inconvenience to the user the response behaviour of the first device 1 in frequency sensitive mode is both stepped and delayed. Figure 2 illustrates the stepping behaviour of the first device 1 when it has been set to provide the maximum power $p_m$. At high frequencies, the power provided to the lamp 2 by the dimmer 5 remains at the level $p_m$. However, at a threshold frequency $f_1$ the power is reduced to a lower level $p_1$. At a second threshold frequency $f_2$ the power is further reduced to a lower level $p_2$ and so on. This stepped reduction helps to reduce the number of adjustments made by the first device 1, and prevents the lights continuously fading and brightening as they would do if the relationship between frequency and power were a simply proportional one.

Figure 3 shows the frequency response of the first device 1 when the power is initially set beneath $p_m$ by the user. Because the power level is also beneath $p_1$,

the first device 1 does not change the power being supplied to the lamp 2 at the threshold frequency $f_1$. However, at threshold frequency $f_2$, the power is reduced to level $p_2$ as before.

Figure 4 illustrates the delaying behaviour of the first device 1 when operating in frequency sensitive mode. The frequency of the power supply, indicated by the dotted line, is initially above the threshold frequency $f_1$, and the power supplied to the lamp 2 has been set to $p_m$ by the user. At time $t_1$, the frequency drops below the threshold frequency $f_1$. However, the first device 1 does not respond immediately; only after time $t_d$ has elapsed does the power supplied to the lamp 2 begin to decrease. The change in brightness is also gradual, taking a response time $t_r$, after which the power supplied to the lamp remains at $p_1$ until the frequency increase again, at which time the power returns to $p_m$.

As with the stepping behaviour, the delay $t_d$ is intended to reduce the number of adjustments made by the first device 1. If the frequency of the power supply is close to one of the threshold frequencies then it can easily pass back and forth over that threshold rapidly, due to small fluctuations in demand and supply of power. Introducing a delay to the response of the first device 1 ensures that when this happens the power will remain at a higher level, instead of constantly readjusting as the first device 1 tracks the changing frequency. No delay is introduced when the power is being increased so that the first device 1 will supply higher levels of power more frequently and so inconvenience the user less. The change in power owing to changes in frequency always takes place over an interval $t_r$, in order that the user has time to adjust and will be less likely to notice the change in the brightness of the lamp 2.

Once a large number of the described devices are installed on an electrical supply grid, they will act in conjunction to balance variations in the frequency of the power supplied over the grid. In addition, the response of these devices will grow as the frequency drops lower. When the frequency drops below $f_1$ only those devices set to provide power at a level between $p_m$ and $p_1$ will respond, reducing the power they provide to $p_1$. However, if the frequency then drops below $f_2$ then all the devices set to provide power at a level between $p_m$ and $p_2$ will respond, reducing their power to $p_2$. Hence larger variations in the power supply attract a larger balancing response from the population of devices according to the invention.

Since different electrical supply grids provide power at different frequencies and within different tolerances, the threshold frequencies $f_1$, $f_2$ etc. are chosen according to the grid on which the first device 1 is functioning. In addition, in order to smooth the response of the population of devices, the response frequencies of devices on a grid are typically varied slightly from device to device so that the electrical supply grid experiences a more gradual response to changes in frequency.

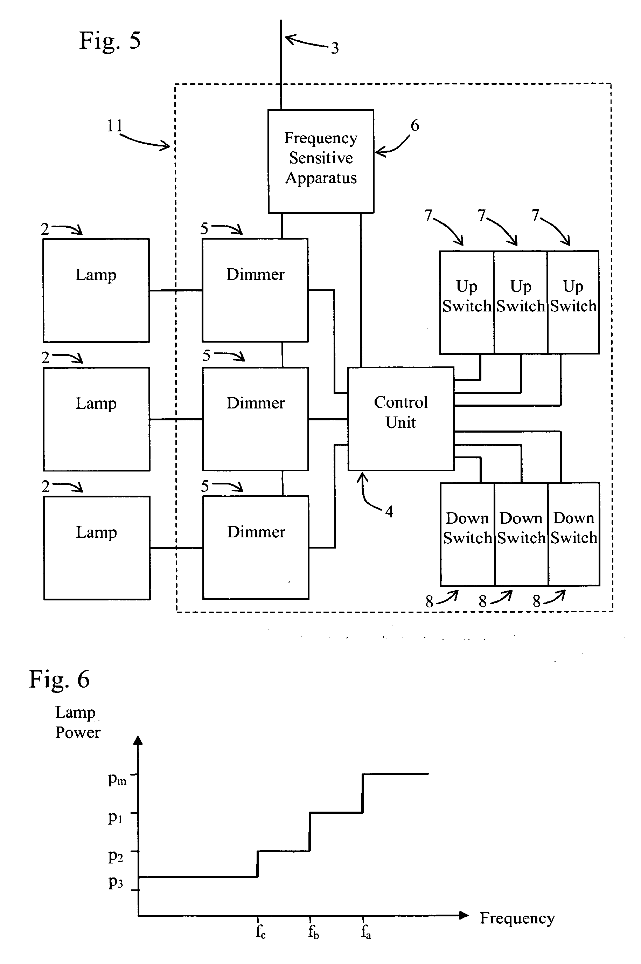

Figure 5 shows a second device 11 according to a second embodiment of the invention, arranged to provide power to three lamps 2. Each lamp 2 is provided with a dimmer 5 and the user can operate three up switches 7 and three down switches 8 in order to control each lamp 2 individually. When the frequency of the power provided through connection 3 drops, the second device 11 shows the same frequency response behaviour as the first device 1 in figure 1. The power output of each lamp 2 is adjusted separately as illustrated in figures 2 to 4.

However, the first device 11 demonstrates additional frequency response behaviour that can also be provided for the first device 1 if desired. Figure 6 illustrates how the second device 11 responds when the frequency as monitored by the frequency sensitive apparatus 6 in the second device 11 begins to rise. The user initially selects a power output for a lamp 2 between $p_2$ and $p_3$. When the frequency rises above a threshold $f_c$ the power provided to the lamp is increased to $p_2$. When the frequency rises above a threshold $f_b$, the power provided to the lamp is increased to $p_1$. Lastly, at any frequency above a threshold $f_a$, the power provided to the lamp is increased to $p_m$. These responses to high frequency exhibit the same delaying behaviour as the responses to low frequency, and are intended to help further regulate the electrical supply grid by reducing peaks in the varying frequency of the grid as well as troughs. Paradoxically, by using more power at certain times and so allowing electrical generators to be used more efficiently, these devices can save energy and expense.

In summary, this invention provides a device 1 for controlling the electrical power supplied to a light source 2. The device comprises at least one dimmer 5 which is suitable for receiving an input in the form of an alternating current and producing an output in the form of a current of the same or lower power. The device also comprises a frequency sensitive apparatus 6 arranged so as to monitor the frequency of the input. The dimmer is arranged to vary the power of the output in response to the frequency of the input as detected by the frequency sensitive apparatus.

**Claims**

1. A device for controlling the electrical power supplied to a light source, the device comprising:

   at least one dimmer suitable for receiving an input in the form of an alternating current and producing an output in the form of a current of the same or lower power; and
   a frequency sensitive apparatus arranged so as to monitor the frequency of the input,
   wherein the dimmer is arranged to vary the power of the output in response to the frequency of the input as detected by the frequency sensitive apparatus.

**2.** A device as claimed in claim 1, wherein the device is configured to allow a user to select the initial power of the output of the device.

**3.** A device as claimed in claim 1 or claim 2, wherein the device is provided with at least one discrete frequency threshold such that in use the power of the output is varied in response to the frequency of the input passing a frequency threshold.

**4.** A device as claimed in claim 3, wherein the device is configured so that the response of the device to the frequency of the input passing at least one of the frequency thresholds is delayed by a predetermined period of time.

**5.** A device as claimed in claim 3 or claim 4, wherein the device is configured so that the response of the device to the frequency of the input passing at least one of the frequency thresholds occurs continuously over a predetermined period of time.

**6.** A device as claimed in any of claims 3 to 5, wherein the device is configured so that the response of the device to the frequency of the input passing at least one of the frequency thresholds is dependent upon the power of the output.

**7.** A device as claimed in claim 6, wherein the device is configured so that if the frequency of the input is below a frequency threshold of a first type and the power of the output is above an associated power threshold also of the first type then the power of the output is reduced.

**8.** A device as claimed in claim 6 or claim 7, wherein the device is configured so that if the frequency of the input is above a frequency threshold of a second type and the power of the output is below an associated power threshold also of the second type then the power of the output is increased.

**9.** A device as claimed in any preceding claim, wherein the device is configured so that a user may select between two operating regimes:

a first operating regime where the electrical power of the output current varies in response to the frequency as measured by the frequency sensitive apparatus; and
a second operating regime where the electrical power of the output current does not vary in response to the frequency as measured by the frequency sensitive apparatus.

**10.** A method for regulating the frequency of alternating current on a network comprising providing a plurality of devices according to any preceding claim and connecting the devices to the network so that in use the alternating current on the network forms the input of the devices.

**Patentansprüche**

**1.** Vorrichtung zum Steuern der elektrischen Leistung, mit der eine Lichtquelle versorgt wird, die Vorrichtung umfassend:

mindestens eine Dimmer, der dafür geeignet ist, eine Eingabe in Form eines Wechselstroms aufzunehmen und eine Ausgabe in Form eines Stroms mit gleicher oder geringerer Leistung zu erzeugen; und
eine frequenzempfindliche Einrichtung, die zur Überwachung der Eingabefrequenz eingerichtet ist,
wobei der Dimmer so eingerichtet ist, dass er die Ausgabeleistung als Reaktion auf die Eingabefrequenz variiert, die durch die frequenzempfindliche Einrichtung festgestellt wird.

**2.** Vorrichtung gemäß Anspruch 1, wobei die Vorrichtung so konfiguriert ist, dass sie es einem Benutzer ermöglicht, die Anfangsausgabeleistung der Vorrichtung auszuwählen.

**3.** Vorrichtung gemäß Anspruch 1 oder Anspruch 2, wobei die Vorrichtung über mindestens einen diskreten Frequenzschwellenwert verfügt, sodass beim Einsatz die Ausgabeleistung als Reaktion darauf variiert wird, dass die Eingabefrequenz einen Frequenzschwellenwert passiert.

**4.** Vorrichtung gemäß Anspruch 3, wobei die Vorrichtung so konfiguriert ist, dass die Reaktion der Vorrichtung darauf, dass die Eingabefrequenz mindestens einen der Frequenzschwellenwerte passiert, um eine vorgegebene Zeitdauer verzögert wird.

**5.** Vorrichtung gemäß Anspruch 3 oder Anspruch 4, wobei die Vorrichtung so konfiguriert ist, dass die Reaktion der Vorrichtung darauf, dass die Eingabefrequenz mindestens einen der Frequenzschwellenwerte passiert, über eine vorgegebene Zeitdauer hinweg kontinuierlich erfolgt.

**6.** Vorrichtung gemäß einem der Ansprüche 3 bis 5, wobei die Vorrichtung so konfiguriert ist, dass die Reaktion der Vorrichtung darauf, dass die Eingabefrequenz mindestens einen der Frequenzschwellenwerte passiert, von der Ausgabeleistung abhängig ist.

**7.** Vorrichtung gemäß Anspruch 6, wobei die Vorrichtung so konfiguriert ist, dass beim Vorliegen einer Eingabefrequenz, die unter einem Frequenzschwellenwert eines ersten Typs liegt, und einer Ausgabeleistung, die über einem zugehörigen Leistungsschwellenwert ebenfalls des ersten Typs liegt, eine Reduzierung der Ausgabeleistung erfolgt.

8. Vorrichtung gemäß Anspruch 6 oder Anspruch 7, wobei die Vorrichtung so konfiguriert ist, dass beim Vorliegen einer Eingabefrequenz, die über einem Frequenzschwellenwert eines zweiten Typs liegt, und einer Ausgabeleistung, die unter einem zugehörigen Leistungsschwellenwert ebenfalls des zweiten Typs liegt, eine Erhöhung der Ausgabeleistung erfolgt.

9. Vorrichtung gemäß einem der vorherigen Ansprüche, wobei die Vorrichtung so konfiguriert ist, dass ein Benutzer zwei Betriebsarten auswählen kann:

eine erste Betriebsart, in der die elektrische Leistung des Ausgabestroms als Reaktion auf die Frequenz variiert wird, die durch die frequenzempfindliche Einrichtung gemessen wird; und eine zweite Betriebsart, in der die elektrische Leistung des Ausgabestroms nicht als Reaktion auf die Frequenz variiert wird, die durch die frequenzempfindliche Einrichtung gemessen wird.

10. Verfahren zum Regeln der Frequenz des Wechselstroms in einem Netz, umfassend das Bereitstellen einer Mehrzahl von Vorrichtungen gemäß einem der vorherigen Ansprüche sowie das Verbinden der Vorrichtungen mit dem Netz, sodass beim Einsatz der Wechselstrom im Netz die Eingabe der Vorrichtungen bildet.

**Revendications**

1. Un dispositif pour contrôler l'énergie électrique fournie à une source de lumière, le dispositif comportant :

au moins un variateur adapté pour recevoir une entrée sous la forme d'un courant alternatif et produire une sortie sous la forme d'un courant d'une puissance égale ou inférieure ; et un appareil détecteur de fréquence agencé de façon à surveiller la fréquence de l'entrée, où le variateur est agencé pour faire varier la puissance de la sortie en réponse à la fréquence de l'entrée telle que détectée par l'appareil détecteur de fréquence.

2. Un dispositif tel que revendiqué dans la revendication 1, où le dispositif est configuré pour permettre à un utilisateur de sélectionner la puissance initiale de la sortie du dispositif.

3. Un dispositif tel que revendiqué dans la revendication 1 ou la revendication 2, où le dispositif est doté d'au moins un seuil de fréquence discret de telle sorte que lors de l'utilisation la puissance de la sortie varie en réponse au fait que la fréquence de l'entrée dépasse un seuil de fréquence.

4. Un dispositif tel que revendiqué dans la revendication 3, où le dispositif est configuré de façon à ce que la réponse du dispositif au fait que la fréquence de l'entrée dépasse au moins un des seuils de fréquence soit retardée d'une période de temps prédéterminée.

5. Un dispositif tel que revendiqué dans la revendication 3 ou la revendication 4, où le dispositif est configuré de façon à ce que la réponse du dispositif au fait que la fréquence de l'entrée dépasse au moins un des seuils de fréquence se produise de façon continue pendant une période de temps prédéterminée.

6. Un dispositif tel que revendiqué dans n'importe lesquelles des revendications 3 à 5, où le dispositif est configuré de façon à ce que la réponse du dispositif au fait que la fréquence de l'entrée dépasse au moins un des seuils de fréquence dépende de la puissance de la sortie.

7. Un dispositif tel que revendiqué dans la revendication 6, où le dispositif est configuré de telle sorte que si la fréquence de l'entrée est inférieure à un seuil de fréquence d'un premier type et que la puissance de la sortie est supérieure à un seuil de puissance associé également du premier type alors la puissance de la sortie est réduite.

8. Un dispositif tel que revendiqué dans la revendication 6 ou la revendication 7, où le dispositif est configuré de telle sorte que si la fréquence de l'entrée est supérieure à un seuil de fréquence d'un deuxième type et que la puissance de la sortie est inférieure à un seuil de puissance associé également du deuxième type alors la puissance de la sortie est augmentée.

9. Un dispositif tel que revendiqué dans n'importe quelle revendication précédente, où le dispositif est configuré de façon à ce qu'un utilisateur puisse sélectionner entre deux régimes de fonctionnement :

un premier régime de fonctionnement où la puissance électrique du courant de sortie varie en réponse à la fréquence telle que mesurée par l'appareil détecteur de fréquence ; et un deuxième régime de fonctionnement où la puissance électrique du courant de sortie ne varie pas en réponse à la fréquence telle que mesurée par l'appareil détecteur de fréquence.

**10.** Un procédé pour réguler la fréquence d'un courant alternatif sur un réseau comportant la fourniture d'une pluralité de dispositifs selon n'importe quelle revendication précédente et la connexion des dispositifs au réseau de façon à ce que lors de l'utilisation le courant alternatif sur le réseau forme l'entrée des dispositifs.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070198133 A1
- WO 0180395 A2
- FR 1017057
- IT TO20060447 A1